# EUROPEAN PATENT APPLICATION

(11) **EP 4 336 883 A1**
(43) Date of publication of application: **13.03.2024**
(21) Application number: 22803846.9
(22) Date of filing: 11.05.2022
(51) Int. Cl.: H04W 24/02

(54) **MODELING METHOD, NETWORK ELEMENT DATA PROCESSING METHOD AND APPARATUS, ELECTRONIC DEVICE, AND MEDIUM**

(30) Priority: 19.05.2021 CN 202110548992
(71) Applicant: ZTE Corporation, Shenzhen, Guangdong 518057 (CN)
(72) Inventor: ZHAO, Yanliang, Shenzhen, Guangdong 518057 (CN)
(74) Representative: Canzler & Bergmeier Patentanwälte Partnerschaft mbB
(86) International application number: PCT/CN2022/092213
(87) International publication number: WO 2022/242524

(57) **Abstract**

The present application provides a modeling method, a network element data processing method and apparatus, an electronic device, and a medium. The modeling method comprises: establishing a network element image model; the network element image model being used for indicating a correlation between different first network element data; the network element image model comprising a view sub-model; the view sub-model comprising an object; and the object comprising two or more pieces of first network element data, and the first network element data belonging to the same object having a correlation. The network element data processing method comprises: when second network element data needs to be collected, collecting the second network element data; determining, according to the pre-established network element image model, third network element data related to the second network element data; the network element image model comprising the view sub-model; the view sub-model comprising the object; the object comprising the first network element data, and the first network element data belonging to the same object having a correlation; collecting the third network element data; and reporting the second network element data and the third network element data.

## Description

### CROSS-REFERENCE TO RELATED APPLICATIONS

This application claims priority to the patent application No. 202110548992.1 filed with the China Patent Office on May 19, 2021, content of which is incorporated by reference hereby in its entirety.

### TECHNICAL FIELD

The present application relates to, but is not limited to, the field of data processing.

### BACKGROUND

At present, data in each dimension of a base station is separately acquired and reported, which results in the separation of data in different dimensions, so that on-site operation and maintenance personnel need to conduct comprehensive data analysis based on experience when analyzing the data to troubleshoot a wireless network problem. Therefore, the working efficiency of on-site operation and maintenance personnel is very low and the accuracy of troubleshooting is poor.

### SUMMARY

The present application provides a modeling method, a network element data processing method and apparatus, an electronic device, and a medium.

In a first aspect, the present application provides a modeling method, including: establishing a network element image model; wherein the network element image model is configured to indicate a correlation between different pieces of first network element data; the network element image model includes: a view sub-model; the view sub-model includes: an object including two or more pieces of first network element data; and different pieces of first network element data belonging to the same object have a correlation.

In a second aspect, the present application provides a network element data processing method, including: acquiring second network element data when desired; determining, according to a pre-established network element image model, third network element data correlated to the second network element data; wherein the network element image model is configured to indicate a correlation between different pieces of first network element data; the network element image model includes: a view sub-model; the view sub-model includes: an object including two or more pieces of first network element data; and different pieces of first network element data belonging to the same object have a correlation; acquiring the third network element data; and reporting the second network element data and the third network element data.

In a third aspect, the present application provides an electronic device, including: at least one processor; and a memory having at least one program stored thereon which, when executed by the at least one processor, causes any one of the modeling methods described herein, or any one of the network element data processing methods described herein, to be implemented.

In a fourth aspect, the present application provides a computer-readable storage medium storing a computer program thereon which, when executed by a processor, causes any one of the modeling methods described herein, or any one of the network element data processing methods described herein, to be implemented.

In a fifth aspect, the present application provides a modeling apparatus, including: an establishment module configured to: establish a network element image model; wherein the network element image model is configured to indicate a correlation between different pieces of first network element data; the network element image model includes: a view sub-model; the view sub-model includes: an object including two or more pieces of first network element data; and different pieces of first network element data belonging to the same object have a correlation.

In a sixth aspect, the present application provides a network element data processing apparatus, including: an acquisition module configured to acquire second network element data when desired; a determination module configured to determine, according to a pre-established network element image model, third network element data correlated to the second network element data; wherein the network element image model is configured to indicate a correlation between different pieces of first network element data; the network element image model includes: a view sub-model; the view sub-model includes: an object including two or more pieces of first network element data; and different pieces of first network element data belonging to the same object have a correlation; the acquisition module further configured to: acquire the third network element data; and a reporting module configured to report the second network element data and the third network element data.

### BRIEF DESCRIPTION OF DRAWINGS

FIG. 1 is a flowchart of a modeling method according to the present application;
FIG. 2 is a flowchart of a network element data processing method according to the present application;
FIG. 3 is a block diagram of a modeling apparatus according to the present application;
FIG. 4 is a block diagram of a network element data processing apparatus according to the present application;
FIG. 5 is a block diagram of a network element data processing system according to the present application; and
FIG. 6 is a block diagram of a network element data processing system according to the present application.

### DETAIL DESCRIPTION OF EMBODIMENTS

In order to make those skilled in the art better understand the technical solutions of the present application, the following describes the modeling method, the network element data processing method and apparatus, the electronic device, and the medium of present application in detail with reference to the accompanying drawings.

Example implementations will be described more sufficiently below with reference to the accompanying drawings, but which may be embodied in different forms and should not be construed as limited to the implementations set forth herein. Rather, these implementations are provided so that the present application will be thorough and complete, and will fully convey the scope of the present application to those skilled in the art.

Implementations of the present application and features thereof may be combined with each other without conflict.

As used herein, the term "and/or" includes any and all combinations of at least one associated listed item.

The terminology used herein is for the purpose of describing specific implementations only and is not intended to limit the present application. As used herein, the singular forms "a", "an" and "the" are intended to include the plural forms as well, unless the context clearly indicates otherwise. It will be further understood that as used herein, the terms "comprise" and/or "made of ..." specify the presence of the stated features, integers, steps, operations, elements, and/or components, but do not preclude the presence or addition of at least one other feature, integer, step, operation, element, component, and/or group thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present application, and will not be interpreted in an idealized or overly formal sense unless expressly so defined herein.

When analyzing the data to troubleshoot a wireless network problem, on-site operation and maintenance personnel need to comprehensively analyze the data based on experience to find out all base station data related to the wireless network problem, and then troubleshoot the wireless network problem based on all the base station data related to the wireless network problem, which reduces the working efficiency of the on-site operation and maintenance personnel. Moreover, since data in each dimension of the base station is separately acquired and reported, even if the on-site operation and maintenance personnel find out all base station data related to the wireless network problem, it is still impossible to troubleshoot the wireless network problem based on the base station data at the same time because data in different dimensions is not acquired and reported at the same time, leading to poor accuracy of problem troubleshooting.

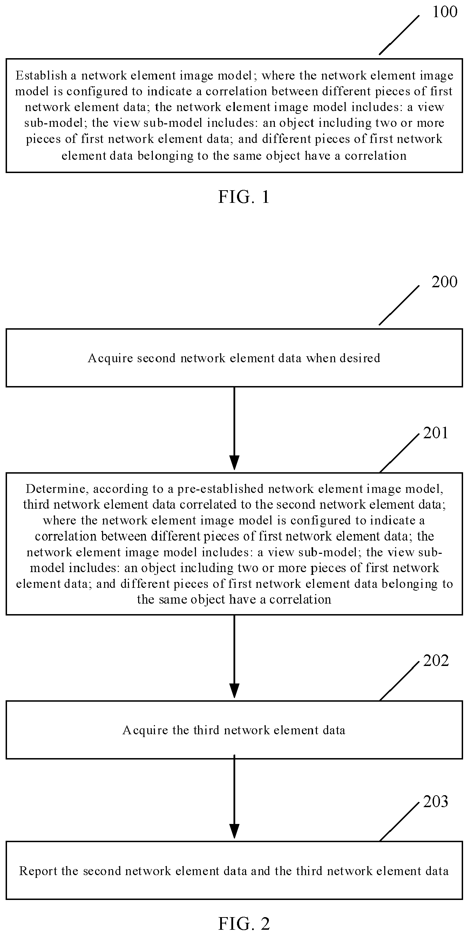

FIG. 1 is a flowchart of a modeling method according to the present application.

In a first aspect, referring to FIG. 1, the present application provides a modeling method, including the following operation 100. At operation 100, a network element image model is established; where the network element image model is configured to indicate a correlation between different pieces of first network element data; the network element image model includes: a view sub-model; the view sub-model includes: an object including two or more pieces of first network element data; and different pieces of first network element data belonging to the same object have a correlation.

In the present application, the network element may refer to any network element, such as a base station, and the type of the network element is not limited herein.

Some relevant descriptions are respectively given below on the network element image model, the view sub-model, the object, and the first network element data.

### (I) Network element image model

In the present application, the network element image model may include one view sub-model, or may include two or more view sub-models. The number of view sub-models included in the network element image model may be determined based on an actual situation, and is not limited herein.

In the present application, which view sub-models are included in the network element image model may be determined based on an actual situation, and the type and content of the view sub-models included in the network element image model are not limited herein.

For example, a certain network element image model may include, but is not limited to, at least one of: a logic network element view sub-model, an adjacent logic network element view sub-model, a logic networking view sub-model, an air interface view sub-model, a network element hardware resource view sub-model, a network element operation resource view sub-model, or a network element software operation view sub-model. The view sub-models describe the network element by network element data in different dimensions. For example, the air interface view sub-model describes the network elements by network element data in the air interface dimension, the network element hardware resource view sub-model describes the network elements by network element data in the hardware resource dimension, the network element operation resource view sub-model describes the network elements by network element data in the operation resource dimension, and the network element software operation view sub-model describes the network elements by network element data in the software operation dimension.

In some exemplary implementations, in a case where the network element image model includes two or more view sub-models, some or all of the view sub-models have an association relationship. Here, the association relationship between some or all of the view sub-models is established, so that the pieces of first network element data in different view sub-models are associated to form first network element data with a further association relationship, thereby laying a foundation for subsequent network element data processing.

In an implementation of the present application, the association relationship between two or more view sub-models means that the two or more view sub-models satisfy a first preset condition which may be preset based on an actual situation. For example, there is an association relationship between view sub-models that include the same object. The same object here merely refers to an object having the same name, while the attributes, states, and behavior features included in the object may differ.

For example, there is an object called central processing unit (CPU) in the network element hardware resource view sub-model; and there is also an object called CPU in the network element operation resource view sub-model. Therefore, there is an association relationship between the network element hardware resource view sub-model and the network element operation resource view sub-model.

In some exemplary implementations, two view sub-models having an association relationship includes: attributes of the two view sub-models each include a connector attribute; and the connector attribute of one of the view sub-models includes: a path of the connector attribute of the other view sub-model in the other view sub-model.

In other words, if the two view sub-models are a view sub-model 1 and a view sub-model 2, respectively, a certain attribute of a certain object in the view sub -model 1 is connector attribute, and a certain attribute of a certain object in the view sub-model 2 is also connector attribute, then a value of the connector attribute in the view sub-model 1 is a path of the connector attribute of the view sub-model 2 in the view sub-model 2, and a value of the connector attribute in the view sub-model 2 is a path of the connector attribute of the view sub-model 1 in the view sub-model 1.

In the present application, the first network element data in two view sub-models can be associated through the connector attributes in the two view sub-models, and through the connector attribute of one view sub-model, the first network element data of the object where the connector attribute of the other view sub-model is located can be accessed.

In the present application, the two object attributes used for establishing the association relationship between the two view sub-models may be determined based on an actual situation, and are not limited herein.

In some exemplary implementations, in a case where there is an association relationship between view sub-models that include the same object, two sub-view models having an association relationship includes: attributes of the same object in the two view sub-models both include a connector attribute.

For example, there is an object called CPU including a CPU connector attribute in the network element hardware resource view sub-model; and there is also an object called CPU including a CPU connector attribute in the network element operation resource view sub-model. A value of the CPU connector attribute in the network element hardware resource view sub-model is a path of the CPU connector attribute of the network element operation resource view sub-model in the network element operation resource view sub-model, and a value of the CPU connector attribute in the network element operation resource view sub-model is a path of the CPU connector attribute of the network element hardware resource view sub-model in the network element hardware resource view sub-model.

In the present application, paths are sequentially represented by node names between a root node of a tree structure corresponding to the view sub-model to a node where the connector attribute is located. For example, in the network element hardware resource view sub-model, the object CPU includes a CPU connector attribute, and then a path of the CPU connector attribute in the network element hardware resource view sub-model is: network element hardware resource view sub-model -> object CPU -> CPU connector attribute.

In the present application, through the connector attribute of one view sub-model, other first network element data of the object where the connector attribute of another view sub-model is located can be accessed.

### (II) View sub-model

In the present application, a view sub-model may include one object, or may include two or more objects. The number of objects in the view sub-model may be determined based on an actual situation, and is not limited herein.

In the present application, which objects are included in the view sub-model may be determined based on an actual situation, and the type and content of the objects included in the view sub-model are not limited herein.

For example, objects including first network element data in the same dimension may be classified into the same view sub-model, and objects including first network element data in different dimensions may be classified into different view sub-models. The first network element data in the same dimension refers to first network element data that satisfies a second preset condition. For example, different devices may be each established as a device object for air interface data describing different devices, and the first network element data in each device object is air interface data describing a device.

In the present application, the view sub-model may include one level of objects, or may include two or more levels of objects. In the case where the view sub-model includes two or more levels of objects, the objects at the same level may be in a peer relationship, while the objects at different levels may be in a parent-child relationship.

For example, in the network element hardware resource view sub-model, an object at a first level is a single board, a first object at a second level is a solid state disk (SSD) in the single board, and a second object at the second level is an optical port, then the single board and the SSD are in a parent-child relationship, and the single board and the optical port are also in a parent-child relationship.

In some exemplary implementations, in a case where the view sub-model includes two or more objects, some or all of the objects in the same view sub-model have a parent-child relationship. Here, the parent-child relationship between some or all of the objects in the same view sub-model is established, so that the pieces of first network element data in different objects of the same view sub-model are associated to form first network element data with a further association relationship, thereby laying a foundation for subsequent network element data processing.

The parent-child relationship between two or more objects in the present application means that the two or more objects satisfy a third preset condition which may be preset based on an actual situation. For example, objects with an inclusion relationship in the same view sub-model have a parent-child relationship.

For example, in the foregoing implementation, the single board and the SSD have an inclusion relationship therebetween, and the single board and the optical port have an inclusion relationship therebetween, so the single board object and the SSD object have a parent-child relationship therebetween, and the single board object and the optical port object have a parent-child relationship therebetween.

In some exemplary implementations, in a case where the view sub-model includes two or more objects, some or all of the objects in the same view sub-model may have a peer relationship.

The peer relationship between two or more objects in the present application means that the two or more objects satisfy a fourth preset condition which may be preset based on an actual situation. For example, objects without any inclusion relationship therebetween in the same view sub-model have a peer relationship.

### (III) Objects

In the present application, an object may include one piece of first network element data, or may include two or more pieces of first network element data. The number of pieces of first network element data in the object may be determined based on an actual situation, and is not limited herein.

In the present application, which first network element data is included in the object may be determined based on an actual situation, and the type and content of the first network element data included in the object are not limited herein.

### (IV) First network element data

In some exemplary implementations, the first network element data includes at least one of: an attribute, a state, or a behavior feature.

For example, in the network element hardware resource view sub-model, an object at a first level is a single board, a first object at a second level is an SSD in the single board, and a second object at the second level is an optical port. The attribute of the single board includes at least one of, for example, a position of the single board, a physical type of the single board, or the like, and the behavior feature of the single board includes, for example, a temperature of the single board, or the like. The attribute of the SSD includes at least one of, for example, a serial number, a version, a number of bad blocks, or the like of the SSD, the state of the SSD includes, for example, a chip level failure state, or the like, and the behavior feature of the SSD includes at least one of, for example, an average number of erasing actions, a device temperature, or the like. The attribute of the optical port includes , for example, a type of the optical port, or the like, and the behavior feature of the optical port includes, for example, a bit error rate, or the like.

In some exemplary implementations, establishing the network element image model includes: establishing first network element data having a correlation as the object; constructing the view sub-model with some or all objects; and constructing the network element image model with all view sub-models.

In some exemplary implementations, the network element image model may also be established by: establishing a frame of a view sub-model in the network element image model; adding a frame of an object to the frame of the view sub-model; and adding first network element data having a correlation to the frame of the object.

In some exemplary implementations, establishing the network element image model further includes: under the condition that two objects have an inclusion relationship therebetween, establishing a parent-child relationship between the two objects; and under the condition that two view sub-models include the same object, establishing an association relationship between the two view sub-models. Constructing the view sub-model with some or all objects includes: constructing the view sub-model with objects in the same dimension.

In some exemplary implementations, establishing the network element image model further includes: establishing a parent-child relationship and/or a peer relationship between objects in the same view sub-model.

In some exemplary implementations, which first network element data has a correlation may be predefined based on an actual situation. For example, attributes, states and behavior features belonging to the same network element or device or unit or functional component are defined as first network element data having a correlation.

Other establishing method besides the two listed above may also be adopted, and the establishing method is not intended to limit the scope of the implementations of the present application.

In some exemplary implementations, after establishing the network element image model, the method further includes: modifying the established network element image model.

In some exemplary implementations, the network element image model is modified by at least one of: adding a view sub-model; deleting a view sub-model; modifying a view sub-model; adding an object; deleting an object; modifying an object; adding first network element data; deleting first network element data; or modifying first network element data.

The implementation manner of the modification to the network element image model is not limited herein. For example, the modification to the network element image model may be implemented by modifying a network element image model file.

The network element image model established in the present application may be a general model or a model established for a specific application scenario. Under the condition that the established network element image model is a general model, the established network element image model may be modified to adapt the modified network element image model to a specific application scenario. Whether the established network element image model meets a specific application scenario is not limited herein.

According to the modeling method of the present application, a network element image model is established, where different pieces of first network element data having a correlation can be established into the same object, so that some or all pieces of first network element data are associated to form first network element data having an association relationship, thereby laying a foundation for subsequent network element data processing.

FIG. 2 is a flowchart of a network element data processing method according to the present application.

In a second aspect, referring to FIG. 2, the present application provides a network element data processing method, which may include the following operations 200 to 203.

At operation 200, second network element data is acquired when desired.

In the present application, the network element data may be acquired according to two policies, including: periodic acquisition and trigger acquisition.

The periodic acquisition refers to acquisition performed within a fixed time period, while the trigger acquisition refers to acquisition performed when a trigger condition is met, where the trigger condition may be receiving an issued acquisition instruction or the like.

In some exemplary implementations, for the trigger acquisition, the second network element data is desired to be acquired in a case of: receiving an acquisition instruction that instructs acquisition of the second network element data.

In some exemplary implementations, for the periodic acquisition, the second network element data is desired to be acquired in a case of: reaching an acquisition period of the second network element data.

At operation 201, third network element data correlated to the second network element data is determined, according to a pre-established network element image model; where the network element image model is configured to indicate a correlation between different pieces of first network element data; the network element image model includes: a view sub-model; the view sub-model includes: an object including two or more pieces of first network element data; and different pieces of first network element data belonging to the same object have a correlation.

The network element image model here is consistent with the network element image model described in the modeling method of the foregoing implementations, and thus is not repeated here.

In some exemplary implementations, determining, according to the pre-established network element image model, the third network element data correlated to the second network element data includes: under the condition that there is no association relationship between the view sub-model in which the second network element data is located in the network element image model and any other view sub-model in the network element image model, determining that the third network element data includes: all other network element data in the view sub-model in which the second network element data is located except the second network element data.

In some exemplary implementations, determining, according to the pre-established network element image model, the third network element data correlated to the second network element data includes: under the condition that there is an association relationship between the view sub-model in which the second network element data is located in the network element image model and another view sub-model in the network element image model, determining that the third network element data includes: all other network element data in the view sub-model in which the second network element data is located except the second network element data, and all network element data in the view sub-model having an association relationship with the view sub-model in which the second network element data is located in the network element image model.

At operation 202, the third network element data is acquired.

In some exemplary implementations, the second network element data and the third network element data are acquired within the same time period.

In some exemplary implementations, the second network element data and the third network element data may be acquired at the same time point.

In the present application, by acquiring the second network element data and the third network element data at the same time point or within the same time period, troubleshooting of the wireless network problem can be performed based on the network element data at the same time point or within the same time period, thereby improving the accuracy of the problem troubleshooting.

For example, in a normal case, periodic acquisition is performed for the performance in a granularity period of 15 minutes, and trigger acquisition is performed for configuration data, that is, configuration data is acquired upon changes. However, according to the modeling method of the present application, the configuration data is taken as an attribute of a certain object, and the performance is taken as a behavior feature of that object, so that when the acquisition period for the performance is reached, both the performance and the configuration data are acquired; and when the configuration data changes, the performance and the configuration data are also acquired. In this manner, when either of the performance and the configuration data having an association relationship is to be acquired, acquisition of the other is also triggered, thereby ensuring the timeliness and association of the network element data.

At operation 203, the second network element data and the third network element data are reported.

In some exemplary implementations, the second network element data and the third network element data may be reported to a public file transfer protocol (FTP) server, and then obtained and stored by a network management server from the public FTP server.

In some exemplary implementations, the second network element data and the third network element data may be directly reported to and stored in the network management server.

In some exemplary implementations, since the second network element data and the third network element data have a correlation, the network management server is desired to associate the second network element data with the third network element data when storing the second network element data and the third network element data. For example, the second network element data and the third network element data are stored in a database system or a magnetic disk file system, or the second network element data and the third network element data are stored in the same table, or the like. The association method of the second network element data and the third network element data is not limited herein.

In the present application, the network management server may read the stored second network element data and third network element data according to a service requirement, clean the second network element data and the third network element data according to a service requirement, and transmit the network element data after data cleaning to an application as an input parameter of the application to execute corresponding processing.

In the present application, a purpose of cleaning the second network element data and the third network element data according to the service requirement is to screen out network element data desired by the service from the second network element data and the third network element data, and discard network element data not desired by the service. Under the condition that both the second network element data and the third network element data are network element data desired by the service, the second network element data and the third network element data may be directly transmitted to the application without cleaning as input parameters of the application to execute corresponding processing.

In some exemplary implementations, before acquiring the first network element data, the method further includes: pre-establishing the network element image model.

Here, the process of establishing the network element image model is the same as the modeling method described in the foregoing implementations, and thus is not repeated here.

According to the network element data processing method of the present application, based on the pre-established network element image model, the second network element data is acquired along with the third network element data associated with the second network element data, so that the on-site operation and maintenance personnel do not need to obtain the associated network element data by comprehensively analyzing the data, when analyzing the data to troubleshoot a wireless network problem, which increases the working efficiency of the on-site operation and maintenance personnel.

The following examples are listed to describe in detail exemplary implementation processes of the network element data processing method of the present application, and the listed examples are merely for enabling those skilled in the art to better understand the network element data processing method of the present application, and are not intended to limit the scope of the present application.

### Example 1

This example describes a process of implementing an over-temperature risk prediction function of a building base band unit (BBU) of a base station based on a base station image model.

The base station pre-establishes a base station image model. The base station image model includes: a view sub-model including: a single board object, a fan object, and an air inlet object. The single board object and the fan object are in a parent-child relationship, and the single board object and the air inlet object are in a parent-child relationship. The single board object includes: single-board configuration data as an attribute, single-board performance as a behavior feature, and single-board alarm data as a state. The single-board configuration data includes: a single-board type, a single-board slot number, a single-board name, and a single-board manufacturer. The single-board performance includes: a single-board temperature. The single-board alarm data includes: alarm information of single-board over-temperature; The fan object includes: fan configuration data as an attribute, fan performance as a behavior feature, and fan alarm data as a state. The fan configuration data includes: a fan type, a fan name, and a fan manufacturer. The fan performance includes: a fan rotation speed. The fan alarm data includes: alarm information of a fan fault. The air inlet object includes: air inlet configuration data as an attribute, air inlet performance as a behavior feature, and air inlet alarm data as a state. The air inlet configuration data includes: an air inlet type, an air inlet name and an air inlet number. The air inlet performance includes: an air inlet temperature value. The air inlet alarm data includes: alarm information of an abnormal temperature at the air inlet.

While starting the over-temperature risk prediction function of the BBU of the base station, the network management server informs the base station of acquiring the board performance.

The BBU of the base station acquires the board performance at a granularity period of 15 minutes; and acquires the single-board configuration data, the single-board alarm data, the fan performance, the fan configuration data, the fan alarm data, the air inlet performance, the air inlet configuration data, and the air inlet alarm data each time the granularity period is reached.

The BBU of the base station reports the single-board performance, the single-board configuration data, the single-board alarm data, the fan performance, the fan configuration data, the fan alarm data, the air inlet performance, the air inlet configuration data, and the air inlet alarm data to a public FTP server.

After the BBU of the base station finishes 24-hour data acquisition, the network management server reads the single-board performance, the single-board configuration data, the single-board alarm data, the fan performance, the fan configuration data, the fan alarm data, the air inlet performance, the air inlet configuration data, and the air inlet alarm data in the previous 24 hours from the public FTP server.

The network management server obtains, according to a cleaning rule, desired sample data for an over-temperature risk prediction algorithm from the single-board performance, the single-board configuration data, the single-board alarm data, the fan performance, the fan configuration data, the fan alarm data, the air inlet performance, the air inlet configuration data, and the air inlet alarm data in the previous 24 hours. For example, the desired sample data for the over-temperature risk prediction algorithm includes: the alarm information of an abnormal temperature at the air inlet, the alarm information of single-board over-temperature, the alarm information of a fan fault, the air inlet temperature value, the fan rotation speed, the single-board type, the single-board slot number, and the like.

The network management server transmits the desired sample data for the over-temperature risk prediction algorithm to the over-temperature risk prediction algorithm, performs risk prediction through the over-temperature risk prediction algorithm, and outputs a prediction result and corresponding correction suggestions.

### Example 2

This example describes a process of implementing an under-voltage risk prediction function of an active antenna unit (AAU) of a base station based on a base station image model.

The base station pre-establishes a base station image model. The base station image model includes: a view sub-model including: a complete machine object. The complete machine object includes: configuration data as an attribute, and performance as a behavior feature. The configuration data includes: an AAU identifier, and a maximum configurable carrier power. The performance includes: a complete-machine power consumption, a complete-machine transmitting power, a complete-machine input voltage, and an actual carrier transmitting power.

While starting the under-voltage risk prediction function of the AAU of the base station, the network management server informs the base station of acquiring the performance.

The AAU of the base station acquires the performance at a granularity period of 15 minutes; and acquires the configuration data each time the granularity period is reached.

The AAU of the base station reports the performance and the configuration data to a public FTP server.

After the AAU of the base station finishes 24-hour data acquisition, the network management server reads the performance and configuration data in the previous 24 hours from the public FTP server.

The network management server obtains, according to a cleaning rule, desired sample data for an under-voltage risk prediction algorithm from the performance and configuration data in the previous 24 hours. For example, the desired sample data for the under-voltage risk prediction algorithm includes: the complete-machine power consumption, the complete-machine transmitting power, the complete-machine input voltage, the AAU identifier, the maximum configurable carrier power, the actual carrier transmitting power, and the like.

The network management server transmits the desired sample data for the under-voltage risk prediction algorithm to the under-voltage risk prediction algorithm, performs risk prediction through the under-voltage risk prediction algorithm, and outputs a prediction result and corresponding correction suggestions.

### Example 3

According to different application scenarios of different sites, a base station image model including one or more view sub-models may be flexibly provided.

For example, when a site merely focuses on applications of diagnosis or prediction of hardware-related services, a base station image model including only a base station hardware resource view sub-model may be used, where the base station hardware resource view sub-model includes an attribute, a state, and a behavior feature of a base station hardware-related object.

For example, a first-level object in the base station hardware resource view sub-model is a single-board object, and second-level objects include: an SSD object and an optical port object. The first-level object has a parent-child relationship with each of the second-level objects. The single-board object includes: an attribute of the single board, such as a single-board position or a physical type of the single-board; and a behavior feature of the single board, such as a single-board temperature, or the like. The SSD object includes: an attribute of the SSD, such as a serial number, a version, a number of bad blocks, or the like; a state of the SSD, such as a chip level failure state; and a behavior feature of the SSD, such as an average number of erasing actions, a device temperature, or the like. The optical port object includes: an attribute of the optical port, such as a type of the optical port, a behavior feature of the optical port, such as a bit error rate, or the like.

For another example, when a site focuses on applications of diagnosis or prediction of a relatively complex service, a base station image model including a plurality of view sub-models, for example, a logic base station view sub-model, an adjacent logic base station view sub-model, a logic networking view sub-model, an air interface view sub-model, a base station hardware resource view sub-model, a base station operation resource view sub-model, a base station software operation view sub-model, and the like, is desired, where each view sub-model includes an attribute, a state, and a behavior feature of a related object, while connector attributes between the view sub-models are set to facilitate mutual access of data between different view sub-models in an associated manner. For example, a CPU object in the base station hardware resource view sub-model has a CPU connector attribute which is associated with a CPU connector attribute in the base station operation resource view sub-model. Therefore, by means of the connectors, CPU hardware data, such as a CPU ID, a CPU model and the like, in the base station hardware resource view sub-model can be accessed, and CPU operating data, such as a CPU utilization rate and the like, in the base station operation resource view sub-model can also be accessed.

### Example 4

When an operator uses an application based on a base station image model on site, a change in the service may generate more demands on the application, and some demands may lead to a change of the base station image model, such as adding a view sub-model to the base station image model, adding an object to the view sub-model, or adding an attribute, a state or a behavior feature to the object. The change of the base station image model at this time follows a base station image modeling rule, and a code for a parsing model of the base station is also implemented according to the modeling rule, so that the change at this time can be implemented without upgrading a software version of the base station, and a new model can take effect immediately after the model is changed, thereby realizing model driving.

In a third aspect, the present application provides an electronic device, including: at least one processor; and a memory having at least one program stored thereon which, when executed by the at least one processor, causes any one of the modeling methods described above, or any one of the network element data processing methods described above, to be implemented.

The processor is a device with a data processing capability, including but not limited to a central processing unit (CPU), or the like. The memory is a device with a data storage capability including but not limited to, a random access memory (RAM, more specifically SDRAM, DDR, etc.), a read only memory (ROM), an electrically erasable programmable read only memory (EEPROM) or a flash.

In some implementations, the processor and the memory are connected to each other via a bus, and further connected to other components of a computing device.

In a fourth aspect, the present application further provides a computer-readable storage medium storing a computer program thereon which, when executed by a processor, causes any one of the modeling methods described above, or any one of the network element data processing methods described above, to be implemented.

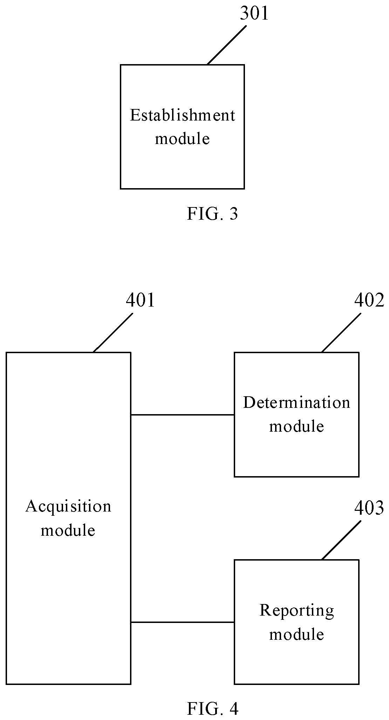

FIG. 3 is a block diagram of a modeling apparatus according to the present application.

In a fifth aspect, referring to FIG. 3, the present application provides a modeling apparatus, including: an establishment module 301 configured to: establish a network element image model. The network element image model is configured to indicate a correlation between different pieces of first network element data. The network element image model includes: a view sub-model. The view sub-model includes: an object including two or more pieces of first network element data; and different pieces of first network element data belonging to the same object have a correlation.

In some exemplary implementations, objects with an inclusion relationship in the same view sub-model have a parent-child relationship.

In some exemplary implementations, some or all view sub-models have an association relationship.

In some exemplary implementations, the first network element data includes at least one of: an attribute, a state, or a behavior feature.

In some exemplary implementations, two view sub-models having an association relationship includes: attributes of the two view sub-models each include a connector attribute; and the connector attribute of one of the view sub-models includes: a path of the connector attribute of the other view sub-model in the other view sub-model.

In some exemplary implementations, the establishment module 301 is configured to: establish first network element data having a correlation as the object; constructing the view sub-model with some or all objects; and constructing the network element image model with all view sub-models.

The implementation process of the modeling apparatus of the present application is the same as that of the modeling method in the foregoing embodiments, and thus is not repeated here.

FIG. 4 is a block diagram of a network element data processing apparatus according to the present application.

In a sixth aspect, referring to FIG. 4, the present application provides a network element data processing apparatus, including an acquisition module 401, a determination module 402, and a reporting module 403.

The acquisition module 401 is configured to acquire second network element data when desired.

The determination module 402 is configured to determine, according to a pre-established network element image model, third network element data correlated to the second network element data. The network element image model is configured to indicate a correlation between different pieces of first network element data. The network element image model includes: a view sub-model. The view sub-model includes: an object including two or more pieces of first network element data; and different pieces of first network element data belonging to the same object have a correlation. The acquisition module 401 is further configured to: acquire the third network element data.

The reporting module 403 is configured to report the second network element data and the third network element data.

In some exemplary implementations, the network element data processing apparatus further includes: a model establishment module 404 configured to pre-establish the network element image model.

In some exemplary implementations, some or all view sub-models have an association relationship.

In some exemplary implementations, the determination module 402 is configured to: under the condition that there is no association relationship between the view sub-model in which the second network element data is located in the network element image model and any other view sub-model in the network element image model, determine that the third network element data includes: all other network element data in the view sub-model in which the second network element data is located except the second network element data.

In some exemplary implementations, the determination module 402 is configured to: under the condition that there is an association relationship between the view sub-model in which the second network element data is located in the network element image model and another view sub-model in the network element image model, determine that the third network element data includes: all other network element data in the view sub-model in which the second network element data is located except the second network element data, and all network element data in the view sub-model having an association relationship with the view sub-model in which the second network element data is located in the network element image model.

In some exemplary implementations, the second network element data and the third network element data are acquired within the same time period.

The implementation process of the network element data processing apparatus of the present application is the same as that of the network element data processing method in the foregoing embodiments, and thus is not repeated here.

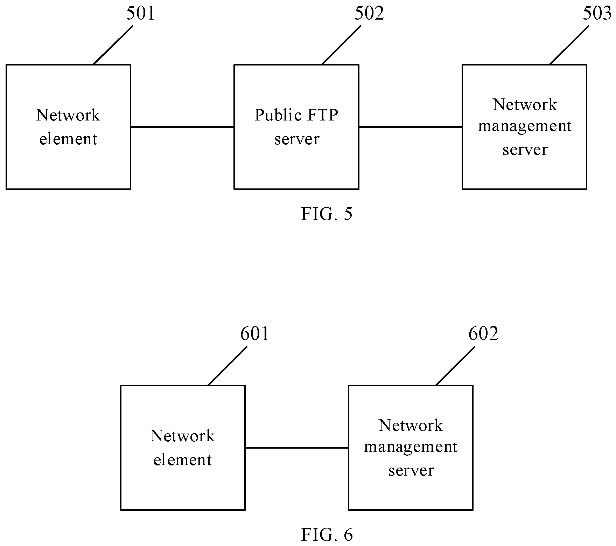

FIG. 5 is a block diagram of a network element data processing system according to the present application.

In a seventh aspect, referring to FIG. 5, the present application provides a network element data processing system, including: a network element 501, a public FTP server 502, and a network management server 503.

The network element 501 is configured to: acquire second network element data when desired; determine, according to a pre-established network element image model, third network element data correlated to the second network element data; where the network element image model is configured to indicate a correlation between different pieces of first network element data; the network element image model includes: a view sub-model; the view sub-model includes: an object including two or more pieces of first network element data; and different pieces of first network element data belonging to the same object have a correlation; acquire the third network element data; and report the second network element data and the third network element data to the public FTP server.

The public FTP server 502 is configured to store the second network element data and the third network element data.

The network management server 503 is configured to obtain the second network element data and the third network element data from the public FTP server; and store the second network element data and the third network element data.

In some exemplary implementations, the network management server 503 is further configured to: perform data cleaning on the second network element data and the third network element data, and transmit the network element data after the data cleaning to an application as an input parameter of the application to execute corresponding processing.

In some exemplary implementations, the network element 501 is further configured to: pre-establish the network element image model.

In some exemplary implementations, some or all view sub-models have an association relationship.

In some exemplary implementations, the network element 501 is configured to determine the third network element data correlated to the second network element data according to the pre-established network element image model by: under the condition that there is no association relationship between the view sub-model in which the second network element data is located in the network element image model and any other view sub-model in the network element image model, determining that the third network element data includes: all other network element data in the view sub-model in which the second network element data is located except the second network element data.

In some exemplary implementations, the network element 501 is configured to determine the third network element data correlated to the second network element data according to the pre-established network element image model by: under the condition that there is an association relationship between the view sub-model in which the second network element data is located in the network element image model and another view sub-model in the network element image model, determining that the third network element data includes: all other network element data in the view sub-model in which the second network element data is located except the second network element data, and all network element data in the view sub-model having an association relationship with the view sub-model in which the second network element data is located in the network element image model.

In some exemplary implementations, the second network element data and the third network element data are acquired within the same time period.

The implementation process of the network element data processing system of the present application is the same as that of the network element data processing method in the foregoing embodiments, and thus is not repeated here.

FIG. 6 is a block diagram of a network element data processing system according to the present application.

In an eighth aspect, referring to FIG. 6, the present application provides a network element data processing system, including: a network element 601 and a network management server 602.

The network element 601 is configured to: acquire second network element data when desired; determine, according to a pre-established network element image model, third network element data correlated to the second network element data; where the network element image model is configured to indicate a correlation between different pieces of first network element data; the network element image model includes: a view sub-model; the view sub-model includes: an object including two or more pieces of first network element data; and different pieces of first network element data belonging to the same object have a correlation; acquire the third network element data; and report the second network element data and the third network element data to the network management server.

The network management server 602 is configured to store the second network element data and the third network element data.

In some exemplary implementations, the network management server 602 is further configured to: perform data cleaning on the second network element data and the third network element data, and transmit the network element data after the data cleaning to an application as an input parameter of the application to execute corresponding processing.

In some exemplary implementations, the network element 601 is further configured to: pre-establish the network element image model.

In some exemplary implementations, some or all view sub-models have an association relationship.

In some exemplary implementations, the network element 601 is configured to determine the third network element data correlated to the second network element data according to the pre-established network element image model by: under the condition that there is no association relationship between the view sub-model in which the second network element data is located in the network element image model and any other view sub-model in the network element image model, determining that the third network element data includes: all other network element data in the view sub-model in which the second network element data is located except the second network element data.

In some exemplary implementations, the network element 601 is configured to determine the third network element data correlated to the second network element data according to the pre-established network element image model by: under the condition that there is an association relationship between the view sub-model in which the second network element data is located in the network element image model and another view sub-model in the network element image model, determining that the third network element data includes: all other network element data in the view sub-model in which the second network element data is located except the second network element data, and all network element data in the view sub-model having an association relationship with the view sub-model in which the second network element data is located in the network element image model.

In some exemplary implementations, the second network element data and the third network element data are acquired within the same time period.

The implementation process of the network element data processing system of the present application is the same as that of the network element data processing method in the foregoing embodiments, and thus is not repeated here.

Those of ordinary skill in the art will appreciate that all or some operations of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes , but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic memories, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary implementations, and although specific terms are employed, they are used and should be interpreted in a generic and descriptive sense only and not for purposes of limitation. In some instances, as would be apparent to one skilled in the art, features, characteristics and/or elements described in connection with a particular implementation may be used alone or in combination with features, characteristics and/or elements described in connection with another implementation, unless expressly stated otherwise. It will, therefore, be understood by those skilled in the art that various changes in form and details may be made therein without departing from the scope of the present application as set forth in the appended claims.

## Claims

1. A modeling method, comprising:
establishing a network element image model; wherein the network element image model is configured to indicate a correlation between different pieces of first network element data; the network element image model comprises: a view sub-model; the view sub-model comprises: an object comprising two or more pieces of first network element data; and different pieces of first network element data belonging to a same object have a correlation.

2. The modeling method according to claim 1, wherein objects with an inclusion relationship in a same view sub-model have a parent-child relationship.

3. The modeling method according to claim 1, wherein some or all view sub-models have an association relationship.

4. The modeling method according to claim 1, wherein the first network element data comprises at least one of:
an attribute, a state, or a behavior feature.

5. The modeling method according to claim 4, wherein two view sub-models having an association relationship comprises:
attributes of the two view sub-models each comprise a connector attribute;
wherein the connector attribute of one of the view sub-models comprises: a path of the connector attribute of the other view sub-model in the other view sub-model.

6. The modeling method according to claim 1, wherein establishing the network element image model comprises:
establishing first network element data having a correlation as the object;
constructing the view sub-model with some or all objects; and
constructing the network element image model with all view sub-models.

7. A network element data processing method, comprising:
acquiring second network element data when desired;
determining, according to a pre-established network element image model, third network element data correlated to the second network element data; wherein the network element image model is configured to indicate a correlation between different pieces of first network element data; the network element image model comprises: a view sub-model; the view sub-model comprises: an object comprising two or more pieces of first network element data; and different pieces of first network element data belonging to a same object have a correlation;
acquiring the third network element data; and
reporting the second network element data and the third network element data.

8. The network element data processing method according to claim 7, wherein before acquiring the first network element data, the method further comprises: pre-establishing the network element image model.

9. The network element data processing method according to claim 7 or 8, wherein some or all view sub-models have an association relationship.

10. The network element data processing method according to claim 9, wherein determining, according to the pre-established network element image model, the third network element data correlated to the second network element data comprises:
under the condition that there is no association relationship between the view sub-model in which the second network element data is located in the network element image model and any other view sub-model in the network element image model, determining that the third network element data comprises: all other network element data in the view sub-model in which the second network element data is located except the second network element data.

11. The network element data processing method according to claim 9, wherein determining, according to the pre-established network element image model, the third network element data correlated to the second network element data comprises:
under the condition that there is an association relationship between the view sub-model in which the second network element data is located in the network element image model and another view sub-model in the network element image model, determining that the third network element data comprises: all other network element data in the view sub-model in which the second network element data is located except the second network element data, and all network element data in the another view sub-model having an association relationship with the view sub-model in which the second network element data is located in the network element image model.

12. The network element data processing method according to claim 7 or 8, wherein the second network element data and the third network element data are acquired within a same time period;
or the second network element data and the third network element data are acquired at a same time point.

13. An electronic device, comprising:
at least one processor; and
a storage having at least one program stored thereon which, when executed by the at least one processor, causes the modeling method according to any one of claims 1 to 6, or the network element data processing method according to any one of claims 7 to 12 to be implemented.

14. A computer-readable storage medium storing a computer program thereon which, when executed by a processor, causes the modeling method according to any one of claims 1 to 6, or the network element data processing method according to any one of claims 7 to 12 to be implemented.

15. A modeling apparatus, comprising:
an establishment module configured to:
establish a network element image model; wherein the network element image model is configured to indicate a correlation between different pieces of first network element data; the network element image model comprises: a view sub-model; the view sub-model comprises: an object comprising two or more pieces of first network element data; and different pieces of first network element data belonging to a same object have a correlation.

16. A network element data processing apparatus, comprising:
an acquisition module configured to acquire second network element data when desired;
a determination module configured to determine, according to a pre-established network element image model, third network element data correlated to the second network element data; wherein the network element image model is configured to indicate a correlation between different pieces of first network element data; the network element image model comprises: a view sub-model; the view sub-model comprises: an object comprising two or more pieces of first network element data; and different pieces of first network element data belonging to a same object have a correlation;
the acquisition module further configured to: acquire the third network element data; and
a reporting module configured to report the second network element data and the third network element data.
